# EUROPEAN PATENT APPLICATION

(11) **EP 1 600 651 A1**
(43) Date of publication of application: **30.11.2005**
(21) Application number: 04425378.9
(22) Date of filing: 26.05.2004
(51) Int. Cl.: F16D 65/092, F16D 65/78

(54) **A friction pad for a spot-type disk brake**

(71) Applicant: FEDERAL-MOGUL OPERATIONS ITALY S.r.l., 12084 Mondovi (IT)
(72) Inventor: Rovere, Massimo, 12061 Carrù (CN) (IT)
(74) Representative: Spandonari, Carlo

(57) **Abstract**

A friction pad for a spot-type disk brake for land vehicles comprises a lining (10) of a sintered metal composition, having a working surface (16) for frictional engagement with a brake disk. The working surface of the lining is perforated with a plurality of regularly spaced holes or recesses (18) whose overall cross-section area is preferably at most 20% of the total area of the working surface of the lining.

## Description

This invention is concerned with a friction pad for a spot-type disk brake for land vehicles, particularly for racing motorcars and motorcycles.

In a spot-type disk brake, as generally used on motorcars and motorcycles, the flat sides of the disk are engaged by a pair of friction pads carried on the cheeks of a caliper, so that, when the caliper is clamped, the resistance to the rotation of the disk developed by the friction is proportional to the friction coefficient, known as µ. However, when the brake is driven energetically and repeatedly over a short time span, for example under racing conditions or down steep slopes, the effectiveness of a conventional disk brake (as measured by the friction coefficient) is liable to progressively decrease in time, for the same applied force, due to a number of factors not exactly known, but generally related to the high heat developed at the pad/disk interface. Among other things, it is believed that melted wear debris or particles that become disjoined from the friction material of the pad as a result of overheating may smear onto the surface of the brake disk and the pad itself, thereby making the surface glassy; other factors may also be at work. In any case, the surface of the pad is progressively damaged and the performance of the brake is reduced.

The main object of this invention is therefore to provide an improved sintered metal friction pad for a spot-type disk brake for land vehicles, which maintains a better braking performance even after repeated brake applications over a short span of time.

The above and other objects and advantages, such as will better appear hereinafter, are achieved by a sintered metal friction pad for a spot-type disk brake for land vehicles, having the features recited in claim 1. The dependent claims set out other advantageous features.

The invention will now be described in greater detail with reference to preferred embodiments shown by way of non-limiting examples in the accompanying drawings, wherein:
Fig. 1 is a front view of a friction pad according to a first embodiment of the invention;
Fig. 2 is a view in cross-section made along line II-II of Fig. 1;
Fig. 3 is a front view of a friction pad according to a second embodiment of the invention;
Fig. 4 is a view in cross-section made along line IV-IV of Fig. 3;
Fig. 5 is a front view of a friction pad according to a third embodiment of the invention; and
Fig. 6 is a front view of a friction pad according to a fourth embodiment of the invention.

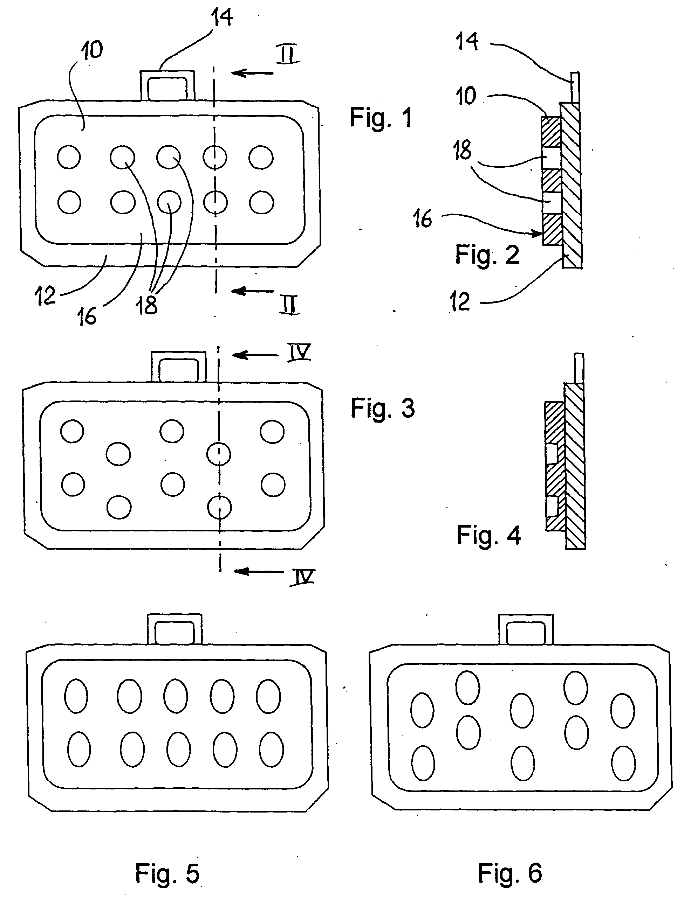

Figs. 1 and 2 show a friction pad for a motorcycle brake, intended for service with a ferrous rotor or disk (not shown). The friction pad comprises a lining 10 of a conventional, sintered metal friction composition, that is bonded to a backplate 12 provided with a fastening lug 14. Lining 10 is 12 mm thick, and has a flat, rectangular working surface 16 measuring about 60 mm x 100 mm. The working surface 16 is perforated with ten round cylindrical holes 18 arranged in five parallel pairs with 10-mm pitch, each hole having a diameter of 3 mm. The holes 18 extend through the lining down to the backing plate.

A friction pad as above described may be used in a spot-type disk brake in place of a conventional friction pad of the same material and with the same geometry (but having an unperforated surface). Using the invention, after repeated brake applications the brake does not exhibit the drastic decay in braking performance that is exhibited by brakes equipped with conventional pads. The performance of the friction pad according to the invention is maintained substantially constant or only slightly decreasing over time.

A test was conducted on two sets of specimens of a commercial friction pad for motorcycle brakes. The test employed was the AK Master procedure, known to persons skilled in the art as a worldwide industry standard test designed to establish the characteristic of a friction material under a range of conditions. Details of the test may be found in S.A.E. (Society of Automotive Engineers) standard J2522. In this test, the retarding force due to the friction of the pads against the disc is measured. The effectiveness of the friction couple is usually expressed by the friction coefficient, µ, which represents the ratio of the retarding force to the normal force applied. The normal force in the case of a disc brake is exerted by the pressure in the hydraulic system controlling the friction pads. Therefore µ may be simply understood as the deceleration achieved for a given pressure applied. The higher the value of µ, the more efficient the friction couple may be considered.

The test was conducted on an inertia dynamometer fitted with a hydraulically actuated brake system consisting of a four-piston brake caliper, a ventilated ferrous brake disc of 305 mm diameter and two brake pads. The surface area of each brake pad was 6500 mm², disregarding any surface featuring (i.e. the holes).

Two identical tests were performed. The first test used Federal-Mogul Ferodo XR sintered brake pads without holes. The second test used a set of identical Federal-Mogul Ferodo XR brake pads, except that each pad had been modified to exhibit eight circular holes of 3 mm, arranged in two parallel rows of four holes along the length of the pad. The pads for the second test were obtained by drilling holes in conventional pads.

The results of the tests are displayed in Tables 1 and 2 below, where a number of characteristic values of µ are given, as specified in the standard, first for the conventional pad (Table 1) and then for the pad with holes (Table 2).

**Table 1 (no holes)**

| µ characteristic values | | average | minimum |
|---|---|---|---|
| Char. value (3) | µ OP18 | 0.41 | |
| Speed/Press. (4.3) | µ v1 20 | 0.41 | |
| Speed/Press. (4.5) | µ vmax | 0.41 | |
| Char. value (5) | µ OP6 | 0.45 | |
| Cold Appl. (6) | µ T40 | 0.51 | |
| Motorway Stop 2 (7) | µ MW2 | 0.45 | |
| Char./Recovery (8) | µ op18 | 0.43 | |
| Fade 1 (9) | µ F1 | | 0.46 |
| Char./Recovery (10) | µ OP18 | 0.43 | |
| Temp//Press.line (12) | µ t500 | | 0.27 |
| Char./Recovery (13) | µ op18 | 0.29 | |
| Fade 2 (14) | µ F2 | | 0.32 |
| Char./Recovery (15) | µ OP18 | 0.39 | |
| | µₙₒₘ = | 0.42 | |
| | µₘᵢₙ = | | 0.27 |

**Table 2 (with holes)**

| µ characteristic values | | average | minimum |
|---|---|---|---|
| Char. value (3) | µ OP18 | 0.46 | |
| Speed/Press. (4.3) | µ v120 | 0.44 | |
| Speed/Press. (4.5) | µ vmax | 0.43 | |
| Char. value (5) | µ OP6 | 0.45 | |
| Cold Appl. (6) | µ T40 | 0.48 | |
| Motorway Stop 2 (7) | µ MW2 | 0.52 | |
| Char./Recovery (8) | µ op18 | 0.44 | |
| Fade 1 (9) | µ F1 | | 0.47 |
| Char./Recovery (10) | µ OP18 | 0.41 | |
| Temp//Press.line (12) | µ t500 | | 0.27 |
| Char./Recovery (13) | µ op18 | 0.36 | |
| Fade 2 (14) | µ F2 | | 0.42 |
| Char./Recovery (15) | µ OP18 | 0.39 | |
| | µₙₒₘ = | 0.44 | |
| | µₘᵢₙ = | | 0.27 |

The above tables show that the average friction over the test was 0.42 for the conventional friction pad, but 0.44 for the friction pad according to the invention.

It is believed that the improvement in the brake performance is mainly due to the fact that the holes provide reservoirs for the wear debris, thus reducing their availability for smearing onto the brake disk. There may also be an improved cooling and/or gas release.

Figs. 3 and 4 show a friction pad similar to Figs. 1 and 2, except that the holes are arranged in staggered pairs. Moreover, the holes in the lining do not extend across the entire thickness of the lining, or, in other words, the lining is provided with recesses extending to at least half of the thickness of the lining.

Figs. 5 and 6 show two further embodiments, similar to Figs. 1-4, in which, however, the holes are elliptical rather than round.

More generally, the invention provides that a friction pad of basically conventional shape and material is perforated with a plurality of small holes, which are regularly spaced over the working surface of the pad. The number of holes may be changed, and the holes may be recesses extending from 50% to 100% of the thickness of the lining. The holes may be cylindrical or tapered, with a circular or an elliptical cross-section, but, more generally, any rounded cross-section, such as a rectangular cross-section with rounded corners, is acceptable. Also, although it is preferred that the cross-section area is uniform for all the holes, this condition is not necessary, and the friction pad of the invention might exhibit smaller holes alternating with larger holes. The arrangement of the holes may be in two or three parallel or staggered rows.

The diameter of each hole should preferably be 3 mm. Larger diameters are also quite acceptable, but, on the other hand, the diameter should not be smaller than 2 mm. The overall cross-sectional area of the holes should not exceed about 20% of the area of the working surface of the pad.

The friction material of the lining is any conventional sintered metal composition.

The friction pad according to the invention is preferably manufactured by conventional techniques, i.e. by moulding a lining including holes or recesses, and then bonding the lining to a backing plate. It is easy to provide the perforations or recesses by suitably designing the mould. The cost of manufacture will then be comparable to the cost for a conventional friction pad. It should be understood, however, that the holes might be obtained in any other suitable manner, notably by first moulding a plain lining and subsequently drilling holes in the lining. It should also be understood that a friction pad might comprise a self-supporting lining, without a backing plate.

## Claims

1. A friction pad for a spot-type disk brake for land vehicles, comprising a lining (10) of a sintered metal composition having a working surface (16) for frictional engagement with a brake disk, **characterized in that** the working surface of the lining is perforated with a plurality of spaced holes or recesses (18).

2. The friction pad of claim 1, **characterized in that** the overall cross-section area of the holes or recesses (18) is not more than 20% of the total area of the working surface (16) of the lining (10).

3. The friction pad of claim 1 or 2, **characterized in that** the holes or recesses (18) extend to a depth of at least 50% of the thickness of the lining.

4. The friction pad of any of claims 1 to 3, **characterized in that** the transverse cross-section of each hole or recess is circular.

5. The friction pad of any of claims 1 to 3, **characterized in that** the transverse cross-section of each hole or recess is elliptical.

6. The friction pad of any of claims 1 to 5, **characterized in that** the holes or recesses are cylindrical.

7. The friction pad of any of claims 1 to 5, **characterized in that** the holes or recesses are tapered.

8. The friction pad of any of claims 4 to 7, **characterized in that** the diameter of each hole or recess at the surface of the lining is in the range 2 mm to 10 mm.

9. The friction pad of claim 8, **characterized in that** the diameter of each hole or recess is about 3 mm.

10. The friction pad of any of claims 1 to 9, **characterized in that** the holes or recesses are arranged in a rectangular array.

11. The friction pad of any of claims 1 to 9, **characterized in that** the holes or recesses are arranged in a staggered array.
